# EUROPEAN PATENT SPECIFICATION

(11) **EP 2 403 291 B1**
(45) Date of publication and mention of the grant of the patent: **11.11.2015**
(21) Application number: 10748294.5
(22) Date of filing: 05.03.2010
(51) Int. Cl.: H04W 72/04

(54) **RADIO BEARER STATUS SENDING METHOD AND DEVICE**
VERFAHREN UND VORRICHTUNG FÜR FUNKTRÄGERSTATUSSENDUNG
PROCÉDÉ ET DISPOSITIF D'ENVOI D'ÉTAT DE PORTEUSE RADIO

(30) Priority: 05.03.2009 CN 200910079317
(43) Date of publication of application: 04.01.2012
(73) Proprietor: China Mobile Communications Corporation, Beijing 100032 (CN)
(72) Inventor: GAO, Youjun, Beijing 100032 (CN); HU, Zhenping, Beijing 100032 (CN); CUI, Chunfeng, Beijing 100032 (CN)
(74) Representative: Manitz, Finsterwald & Partner GbR
(86) International application number: PCT/CN2010/000278
(87) International publication number: WO 2010/099704

(56) References cited:
- WO-A2-2008/112233
- WO-A2-2008/112233
- CN-A- 1 601 963
- US-A1- 2007 177 504
- SAMSUNG: "Complexity aspects of UE based solution", 3GPP DRAFT; R2-070296 COMPLEXITY UE BASED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133384, [retrieved on 2007-01-12]
- NOKIA CORPORATION ET AL: "Happy Bits for E-UTRAN", 3GPP DRAFT; R2-080678 HAPPY BITS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080205, 5 February 2008 (2008-02-05), XP050138511, [retrieved on 2008-02-05]
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 December 2008 (2008-12-01), pages 1-40, XP050377620,

## Description

### Field

The present invention relates to the field of wireless communications and particularly to a method and device for transmitting the status of a radio bearer. Related technology is known from WO 2008/112233 A2.

### Background

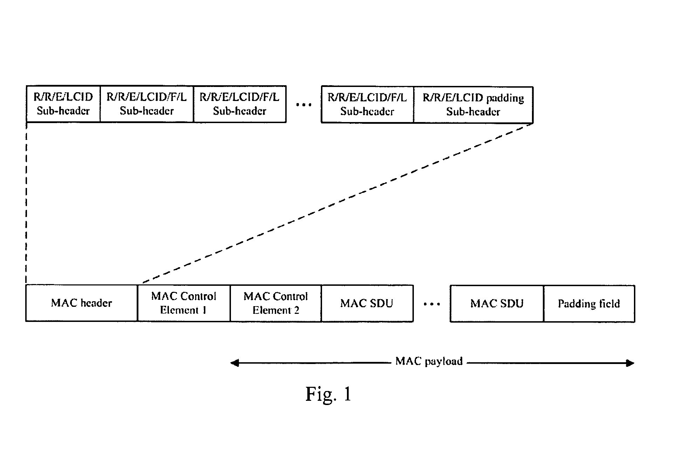

The format and contents of a Media Access Control Protocol Data Unit (MAC PDU) are defined in the specification 3GPP TS 36.321 V8.3.0 of the existing 3GPP LTE R8, as illustrated in Fig. 1. Particularly, service data of each Radio Bearer (RB) is filled in the field of Media Access Control Service Data unit (MAC SDU), and there are sub-headers corresponding to respective MAC SDU fields in the MAC header field, where the contents of the "R" field are reserved bits, the "E" field represents an extended field indicating whether there is a further definition of a field in the MAC header, the "L" field indicates the length of a corresponding MAC SDU or MAC control element and the length of "L" is indicated in the "F" field, and the "LCID" field represents the logic channel identifier corresponding to the MAC SDU field or MAC control element field or padding field.

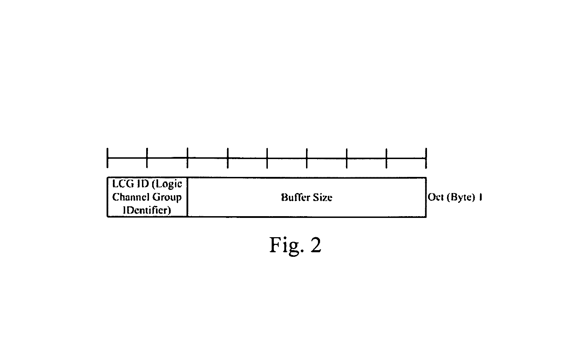

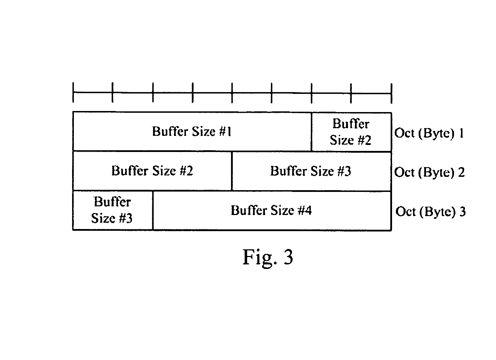

In order to enable a base station to allocate resources reasonably to respective User Equipments (UEs), a Buffer Status Report (BSR) for uplink scheduling is transmitted from the UE side to the base station when a specific condition is satisfied by being filled in an MAC control element field. A Radio Bearer Group (RBG) is composed of RBs with a similar QoS or the same priority in order for a BSR. Merely the Buffer Size (BS) of the RBG with the highest priority is reported in a short BSR in a format as illustrated in Fig. 2, and BSs of four RBGs may be reported in a long BSR in a format as illustrated in Fig. 3, where LCG ID represents the identifier of a logic channel group, Buffer Size represents the buffer size of an RBG, and Oct represents a byte.

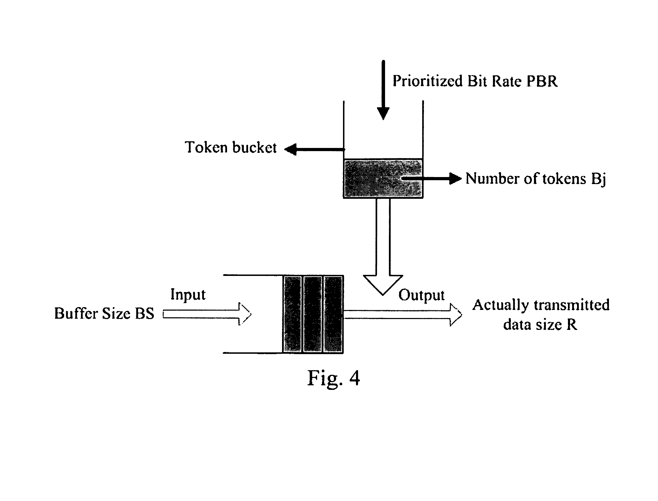

For uplink scheduling and transmission processes, an uplink rate control process in the existing LTE specification also is defined in the 3GPP TS 36.321 V.8.3.0 and the 3GPP TS 36.300 V.8.6.0, and the rate control process at the UE side is generally performed in a token bucket mechanism as illustrated in Fig. 4.

Each RB corresponds to a token bucket, where BS represents the buffer size of the RB, the Prioritized Bit Rate (PBR) represents the actual injection rate of the corresponding token bucket per periodicity, i.e., the number of tokens put into the token bucket per periodicity, and may represent an essentially required rate for the RB, which is a constant value related to the priority of the RB, Bj represents the number of tokens in the token bucket, and R represents the size of data actually transmitted in a current transmission period (i.e., a current Transmission Time Interval, TTI).

A method for performing uplink resource allocation and uplink rate control in the token bucket mechanism at the UE side is as follows.

Operation 1: Bj is updated as per PBR upon arrival of a transmission period.

Operation 2: Resources are allocated to respective RBs with Bj>0 in a descending order of the priorities of the RBs, and Bj is updated dependent upon the result of allocating the resources (Bj may be negative to thereby obviate frequent segmentation and assembling of a data packet).

Operation 3: If there is a remaining part of the uplink resources, then the part of the uplink resources is allocated to the respective RBs in a descending order of the priorities (regardless of the size of Bj) until all the buffered data of the RBs is transmitted or no uplink resource remains.

In the operation 1, an original Bj corresponding to an RB is updated by adding a corresponding value of PBR thereto, to obtain an updated Bj corresponding to the RB.

In the operation 2, the uplink resources are allocated the first time through being allocated to respective RBs with Bj>0 according to the minimum among its corresponding Bj and BS and the currently remaining part of the uplink resource, for the purpose of satisfying preferentially a required rate of PBR for those highly prioritized RBs. Correspondingly, BS of the RB is also updated in view of the uplink resource available to the RB.

In the operation 3, the uplink resources are allocated the second time through allocating to the respective RBs the remaining part of the uplink resources after the uplink resources are allocated the first time, for the purpose of making full use of the uplink resources.

Ideally, a base station allocates uplink resources to respective UEs in such a way that when the respective UEs allocate uplink resources to respective RBs, the uplink resources available to the respective UEs are sufficient for allocation of the uplink resources in the operation 1, that is, the required rates of PBR corresponding to the respective RBs are satisfied. Since the uplink resources are limited, the base station possibly fails to allocate reasonably the uplink resources to the respective UEs, that is, such a possibility may be that the uplink resources available to some of the UEs may be more than sufficiency to satisfy the required rates of PBR corresponding to their respective RBs, and the uplink resources available to the other UEs can not satisfy the required rates of PBR corresponding to their respective RBs.

For example, it is assumed that a system includes a plurality of UEs, a plurality of RBGs are involved for each of the UEs and each of the RBGs includes a plurality of RBs over which uplink data is transmitted. For simplicity, only an RBG including an RB1 and an RB2 with the same priority for two UEs will be analyzed. It is assumed that the RB1 corresponds to transmission on a Logical Channel 1 (LC1) and the RB2 corresponds to transmission ona Logical Channel 2 (LC2), where the LC1 has a higher priority than the LC2 and the LC1 and the LC2 compose a LCG1, and other LCGs with a lower priority for the UEs will not be listed.

It is assumed that the statuses of the respective RBs for the two UEs at an uplink transmission instance of time are as shown in Table 1:

**Table 1: RB Status (in byte)**

| | | BS | BSR | PBR | Bj | Uplink Resources |
|---|---|---|---|---|---|---|
| UE1 | LC1 | 300 | 500 | 100 | 100 | 400 |
| | LC2 | 200 | | 100 | 100 | |
| UE2 | LC1 | 100 | 500 | 100 | 300 | 400 |
| | LC2 | 400 | | 100 | 400 | |

In view of that resources are allocated in an order of priorities of logic channels in the specification 3GPP TS 36.321 V8.3.0, firstly the operation 2 is performed in which resources are allocated as per Bj corresponding to the respective logic channels of the LCG in a descending order of priorities, and the statuses of the respective RBs after the allocation operation are as shown in Table 2:

**Table 2: RB Status (in byte)**

| | | BS | BSR | Bj | Actual Data Transmission |
|---|---|---|---|---|---|
| UE1 | LC1 | 200 | 300 | 0 | 200 |
| | LC2 | 100 | | 0 | |
| UE2 | LC1 | 0 | 100 | 200 | 400 |
| | LC2 | 100 | | 100 | |

As can be apparent from Table 1 and Table 2, although the UE1 and the UE2 report the same BSR and are provided with the same amount of uplink resources, since uplink resources previously available to the RB1 and the RB2 for the UE1 satisfy their required rates of PBR (i.e., Bj corresponding to the LC1 and the LC2 included for the UE1 is equal to PBR in Table 1), the RB1 and the RB2 for the UE1 are provided respectively with uplink resources satisfying their corresponding required rates of PBR, i.e., 100 bytes, and a remaining 200 bytes among the 400 bytes uplink resources provided to the UE1 remains. When a system is heavily loaded, the base station shall allocate the remaining part of the uplink resources to the other UE in an ideal case; and on the other hand, since uplink resources previously available to the RB1 and the RB2 for the UE2 do not satisfy their corresponding required rates of PBR, there are a relatively large number of tokens in their token buckets, and also since there is a relatively large buffer size in the LC2 and the available resources are not sufficient to transmit all the buffered data therein, its corresponding required rate of PBR still can not be satisfied after data transmission in a current periodicity is finished.

As can be apparent from comparison between the UE1 and the UE2, the RB statuses reported from the UEs to the base station are not precise enough in the BSR report mechanism in the existing 3GPP LTE R8 specification, which may lead to inefficient utilization of the uplink resources upon unreasonable allocation thereof by the base station to the respective UEs.

### Summary

Embodiments of the invention provide a method and device for transmitting the status of a radio bearer to improve the precision of the RB status reported from a UE and to further enable a base station to allocate uplink resources more reasonably, thereby improving the efficiency of utilizing the uplink resources.

An embodiment of the invention provides a method for transmitting the status of a radio bearer, which includes:
determining the number of tokens in a token bucket corresponding to the radio bearer after uplink resources are allocated in a current transmission period; and
transmitting first status information indicating that the number of tokens is larger than zero to a base station or transmitting second status information indicating that the number of tokens is not larger than zero to the base station dependent upon the determined number of tokens.

An embodiment of the invention further provides a method for transmitting the status of a radio bearer, which includes:
determining the number of tokens in a token bucket corresponding to the radio bearer; and comparing the number of tokens with a buffer size of the radio bearer after uplink resources are allocated in a current transmission period; and
transmitting first status information indicating that the number of tokens is larger than zero and smaller than the buffer size of the radio bearer to a base station or transmitting second status information indicating that the number of tokens is not larger than zero or not smaller than the buffer size of the radio bearer to the base station dependent upon the determined number of tokens and a result of the comparing; or
transmitting third status information indicating that the number of tokens is larger than zero and not larger than the buffer size of the radio bearer to the base station or transmitting fourth status information indicating that the number of tokens is not larger than zero or is larger than the buffer size of the radio bearer to the base station dependent upon the determined number of tokens and the result of the comparing.

An embodiment of the invention still further provides a method for transmitting the status of a radio bearer, which includes:
determining a buffer size of the radio bearer after uplink resources are allocated in a current transmission period;
determining the number of tokens in a token bucket corresponding to the radio bearer when the buffer size of the radio bearer is larger than zero;
comparing the number of tokens with the buffer size of the radio bearer when the number of tokens is larger than zero; and
transmitting first status information indicating that the buffer size of the radio bearer is not larger than zero dependent upon the determined buffer size of the radio bearer; or
transmitting second status information indicating that the number of tokens is not larger than zero and the buffer size of the radio bearer is larger than zero to a base station dependent upon the determined number of tokens; or
transmitting third status information indicating that the number of tokens is larger than zero and smaller than the buffer size of the radio bearer to the base station or transmitting fourth status information indicating that the number of tokens is larger than zero and not smaller than the buffer size of the radio bearer and the buffer size of the radio bearer is larger than zero to the base station dependent upon a result of the comparing; or
transmitting fifth status information indicating that the number of tokens is larger than zero and not larger than the buffer size of the radio bearer to the base station or transmitting sixth status information indicating that the number of tokens is larger than zero and than the buffer size of the radio bearer and the buffer size of the radio bearer is larger than zero to the base station dependent upon the result of the comparing.

An embodiment of the invention provides a mobile terminal including:
a determination unit configured to determine the number of tokens in a token bucket corresponding to a radio bearer after uplink resources are allocated in a current transmission period; and
a transmission unit configured to transmit first status information indicating that the number of tokens is larger than zero to a base station or transmit second status information indicating that the number of tokens is not larger than zero to the base station dependent upon the determined number of tokens.

An embodiment of the invention further provides a mobile terminal including:
a determination and comparison unit configured to determine the number of tokens in a token bucket corresponding to a radio bearer and compare the number of tokens with a buffer size of the radio bearer after uplink resources are allocated in a current transmission period; and
a transmission unit configured to transmit first status information indicating that the number of tokens is larger than zero and smaller than the buffer size of the radio bearer to a base station or transmit second status information indicating that the number of tokens is not larger than zero or not smaller than the buffer size of the radio bearer to the base station dependent upon the determined number of tokens and a result of the comparison; or
to transmit third status information indicating that the number of tokens is larger than zero and not larger than the buffer size of the radio bearer to the base station or transmit fourth status information indicating that the number of tokens is not larger than zero or is larger than the buffer size of the radio bearer to the base station dependent upon the determined number of tokens and the result of the comparison.

An embodiment of the invention still further provides a mobile terminal including:
a first determination unit configured to determine a buffer size of a radio bearer after uplink resources are allocated in a current transmission period;
a second determination unit configured to determine the number of tokens in a token bucket corresponding to the radio bearer when the buffer size of the radio bearer determined by the first determination unit is larger than zero;
a comparison unit configured to compare the number of tokens with the buffer size of the radio bearer when the number of tokens determined by the second determination unit is larger than zero; and
a transmission unit configured to transmit first status information indicating that the buffer size of the radio bearer is not larger than zero dependent upon the buffer size of the radio bearer determined by the first determination unit; or
to transmit second status information indicating that the number of tokens is not larger than zero and the buffer size of the radio bearer is larger than zero to a base station dependent upon the number of tokens determined by the second determination unit; or
to transmit third status information indicating that the number of tokens is larger than zero and smaller than the buffer size of the radio bearer to the base station or transmit fourth status information indicating that the number of tokens is larger than zero and not smaller than the buffer size of the radio bearer and the buffer size of the radio bearer is larger than zero to the base station dependent upon a result of the comparison by the comparison unit; or
to transmit fifth status information indicating that the number of tokens is larger than zero and not larger than the buffer size of the radio bearer to the base station or transmit sixth status information indicating that the number of tokens is larger than zero and than the buffer size of the radio bearer and the buffer size of the radio bear is larger than zero to the base station dependent upon the result of the comparison by the comparison unit.

In the embodiments of the invention, after uplink resources are allocated in the current transmission period, whether the number of tokens in the token bucket corresponding to the radio bearer is larger than zero or not is determined, and the status information indicating whether the number of tokens is larger than zero or not is transmitted to the base station. As can be apparent from the token bucket mechanism current used in uplink rate control, the number of tokens larger than zero after the uplink resources are allocated indicates that the uplink resources previously allocated to the radio bearer does not satisfy its corresponding required rate of PBR; on the contrary, if the number of tokens is not larger than zero, then this indicates that the uplink resources previously allocated to the radio bearer satisfies its corresponding required rate of PBR. The UE transmits the status information to the base station so that the precision of the RB status reported from the UE can be improved and further the base station can allocate uplink resources more reasonably with use of the status information, thus improving the efficiency of utilizing the uplink resources.

### Brief Description of the Drawings

Fig. 1 is a schematic diagram of the format of a media access control protocol data unit;
Fig. 2 is a schematic diagram of the format of a short buffer status report;
Fig. 3 is a schematic diagram of the format of a long buffer status report;
Fig. 4 is a schematic diagram of the principle of a token bucket mechanism;
Fig. 5 and Fig. 6 are flow charts of a method for transmitting the status of a radio bearer according to a first embodiment of the invention;
Fig. 7 and Fig. 8 are flow charts of a method for transmitting the status of a radio bearer according to a second embodiment of the invention;
Fig. 9 and Fig. 10 are flow charts of a method for transmitting the status of a radio bearer according to a third embodiment of the invention;
Fig. 11 is a schematic diagram of the structure of a mobile terminal according to a fourth embodiment of the invention;
Fig. 12 is a schematic diagram of the structure of a mobile terminal according to a fifth embodiment of the invention; and
Fig. 13 is a schematic diagram of the structure of a mobile terminal according to a sixth embodiment of the invention.

### Detailed Description

### The First Embodiment

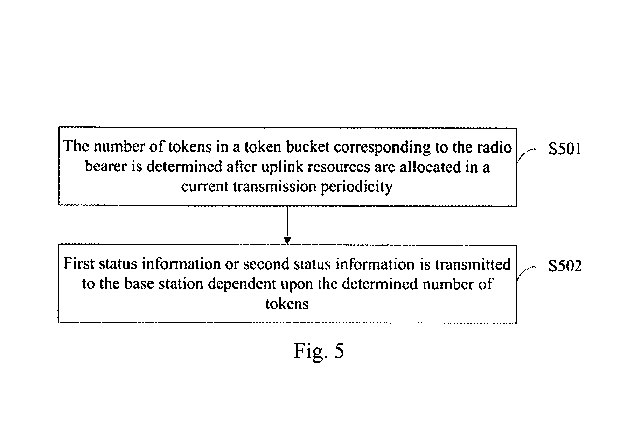

The first embodiment of the invention provides a method for transmitting the status of a radio bearer, which as illustrated in Fig. 5 includes the following operations S501 and S502.

Operation S501. The number of tokens in a token bucket corresponding to the radio bearer is determined after uplink resources are allocated in a current transmission period.

Operation S502. First status information indicating that the number of tokens is larger than zero is transmitted to a base station or second status information indicating the number of tokens is not larger than zero is transmitted to the base station dependent upon the determined number of tokens.

Preferably, the operation S501 further includes comparing the number of tokens with the buffer size of the radio bearer when the number of tokens is larger than zero or comparing the buffer size of the radio bearer with zero when the number of tokens is not larger than zero.

Correspondingly in the operation S502, dependent upon the result of comparison, transmission of the first status information includes:
third status information indicating that the number of tokens is smaller than the buffer size of the radio bearer is transmitted to the base station or fourth status information indicating that the number of tokens is not smaller than the buffer size of the radio bearer is transmitted to the base station; or
fifth status information indicating that the number of tokens is not larger than the buffer size of the radio bearer is transmitted to the base station or sixth status information indicating that the number of tokens is larger than the buffer size of the radio bearer is transmitted to the base station.

Dependent upon the result of comparison, transmission of the second status information includes:
seventh status information indicating that the buffer size of the radio bearer is larger than zero is transmitted to the base station or eighth status information indicating that the buffer size of the radio bearer is not larger than zero is transmitted to the base station.

The method for transmitting the status of an RB according to the first embodiment of the invention will be set forth in details below.

In the first embodiment, uplink resources available to the UE side is allocated to respective RBs thereof in the token bucket mechanism, which includes the following operations 1 to 3.
Operation 1: The number of tokens, Bj, is updated as per a Prioritized Bite Rate (PBR) upon arrival of a transmission period.
Operation 2: The resources are allocated to the respective RBs with Bj>0 in a descending order of the priorities of the RBs, and Bj is updated dependent upon the result of allocating the resources (Bj may be negative to thereby obviate frequent segmentation and assembling of a data packet).
Operation 3: If there is a remaining part of the uplink resources, then the remaining part of the uplink resources is allocated to the respective RBs in a descending order of the priorities (regardless of the size of Bj) until all the buffered data of the RBs is transmitted or no uplink resource remains.

In the operation 1, an original Bj corresponding to an RB is updated by adding a corresponding value of PBR thereto, to obtain an updated Bj corresponding to the RB.

In the operation 2, the uplink resources are allocated the first time in a way that a part of the uplink resources allocated by the UE to the RB currently to be processed is determined from the buffer size BS of the RB, Bj corresponding to the RB and the amount of a remaining part of the uplink resources. After the part of the uplink resources is allocated to the RB, Bj corresponding to the RB is updated correspondingly, and particularly, Bj is updated by subtracting the amount of the part of the uplink resources allocated to the RB from the original Bj; also BS of the RB is updated correspondingly, and particularly, Bs is updated by subtracting the amount of the part of the uplink resources allocated to the RB from the original Bs; and also the amount of the remaining part of the uplink resources is updated correspondingly, and particularly, the amount of the remaining part of the uplink resources is updated by subtracting the amount of the part of the uplink resources allocated to the RB from the original amount of the remaining part of the uplink resources.

The operation 3 is an operation performed if still a part of the uplink resources remains after the operation 2 is performed. The uplink resources are allocated the second time in the operation 3, that is, the remaining uplink resources are allocated to several RBs, and for each of the RBs provided with a further part of the uplink resources, Bs corresponding to the RB is updated correspondingly, and particularly, Bs is updated by subtracting the amount of the further part of the uplink resources allocated to the RB from the previous Bs; and also the amount of the remaining part of the uplink resources is updated correspondingly, and particularly, the remaining part of the uplink resources is updated by subtracting the amount of the further part of the uplink resources allocated to the RB from the previous amount of the remaining part of the uplink resources. However, Bj corresponding to each of the RBs in the operation 3 is smaller than or equal to zero, thus Bj will not be updated even if the RB is provided with a further part of the uplink resources.

Therefore in the operation S501, the number of tokens in a token bucket corresponding to the radio bearer after the uplink resources are allocated in the current transmission period is the updated number of tokens after the UE allocates the uplink resources.

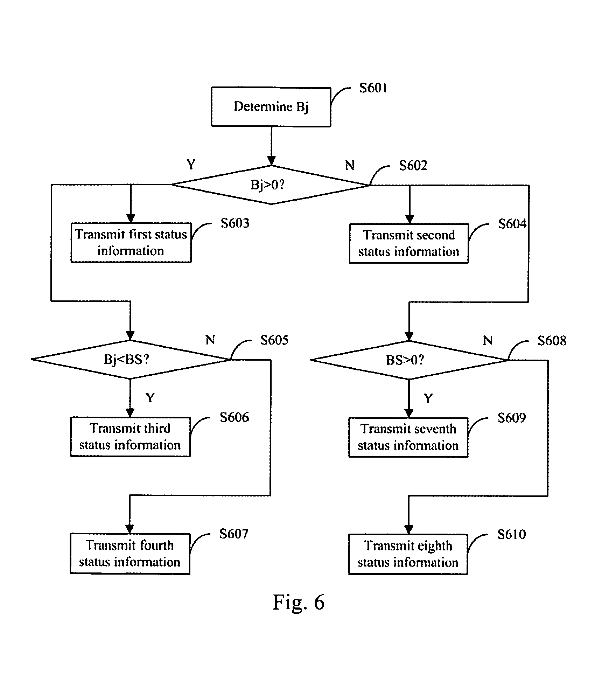

A specific flow of performing the method for transmitting the status of an RB as illustrated in Fig. 5 will be detailed below and as illustrated in Fig. 6 includes the following operations S601 to S610.

Operation S601. Bj is determined.

Operation S602. Whether Bj is larger than zero is determined, and if so, then the operation S603 and also the operation S605 are executed; otherwise, the operation S604 and also the operation S608 are executed.

Operation S603. First status information indicating that Bj is larger than zero is transmitted to a base station.

Operation S604. Second status information indicating that Bj is not larger than zero is transmitted to the base station.

Operation S605. Whether Bj is smaller than BS is determined, and if so, then the operation S606 is executed; otherwise, the operation S607 is executed.

Operation S606. Third status information indicating that Bj is smaller than BS is transmitted to the base station.

Operation S607. Fourth status information indicating that Bj is not smaller than BS is transmitted to the base station.

Operation S608. Whether BS is larger than zero is determined, and if so, then the operation S609 is executed; otherwise, the operation S610 is executed.

Operation S609. Seventh status information indicating that BS is larger than zero is transmitted to the base station.

Operation S610. Eighth status information indicating that BS is not larger than zero is transmitted to the base station.

In the present first embodiment, alternatively whether Bj is not larger than BS, i.e., "Bj ≤ BS", may be determined in the operation S605.

Correspondingly in the operation S606, fifth status information indicating that Bj is not larger than BS is transmitted to the base station.

Correspondingly in the operation S607, sixth status information indicating that Bj is larger than BS is transmitted to the base station.

Particularly in the present first embodiment, the first status information or the second status information may be transmitted in a reserved bit "R" in sub-header fields corresponding to respective radio bearers in a Media Access Control (MAC) Protocol Data Unit (PDU), and the third status information, the fourth status information, the fifth status information, the sixth status information, the seventh status information and the eighth status information may be transmitted in another reserved bit "R" in the sub-header fields corresponding to the respective radio bearers in the MAC PDU. Particularly:

for each of the RBs, a bit "R" in the sub-header field corresponding to the RB is set to 1, which correspondingly represents the first status information; or the bit "R" is set to 0, which correspondingly represents the second status information;

another bit "R" in the sub-header field corresponding to the RB is set to 1, which correspondingly represents the third status information; or the bit "R" is set to 0, which correspondingly represents the fourth status information; or

another bit "R" in the sub-header field corresponding to the RB is set to 1, which correspondingly represents the fifth status information; or the bit "R" is set to 0, which correspondingly represents the sixth status information; or

another bit "R" in the sub-header field corresponding to the RB is set to 1, which correspondingly represents the seventh status information; or the bit "R" is set to 0, which correspondingly represents the eighth status information.

The first status information or the second status information, the third status information or the fourth status information, the fifth status information or the sixth status information, the seventh status information or the eighth status information is transmitted to the base station when data is transmitted to the base station in the MAC PDU.

In another embodiment, a bit "R" may be set "0", which correspondingly represents the first status information; or the bit "R" may be set to "1", which correspondingly represents the second status information.

In another embodiment, another bit "R" may be set to "0", which correspondingly represents the third status information, the fifth status information or the seventh status information; or the another bit "R" may be set to "1", which correspondingly represents the fourth status information, the sixth status information or the eighth status information.

Preferably in the operation S502 and when the first status information or the second status information, the third status information or the fourth status information, the fifth status information or the sixth status information, the seventh status information or the eighth status information is transmitted in the flow illustrated in Fig. 6, also the buffer size of a Radio Bearer Group (RBG) composed of several RBs may be transmitted to the base station; or the buffer size of the RBG may be transmitted to the base station when a preset condition is satisfied. Particularly, the respective RBs composing the RBG have similar priorities or the same priority, and the condition to be satisfied may be present variously, for example, such a condition is preset that the buffer size of the RBG is larger than a preset threshold; or the buffer size of the RBG is transmitted periodically to the base station, where the periodicity is an integer multiple of the transmission period.

Particularly, the buffer size of the RBG may be transmitted in an MAC control element field corresponding to the RBG in the MAC PDU.

With the method according to the first embodiment of the invention, reception at the base station of the first status information of an RB included for the UE indicates that the uplink resources previously available to the RB does not satisfy its required rate of PBR, and reception of the second status information of the RB included for the UE indicates that the uplink resources previously available to the RB has satisfied its required rate of PBR. Also the base station may receive the third status information or the fourth status information, or the fifth status information or the sixth status information indicating a size relationship between the number of tokens corresponding to the RB and its corresponding buffer size when the number of tokens is larger than zero, or may receive the seventh status information or eighth status information indicating a size relationship between the buffer size corresponding to the RB and zero when the number of tokens is not larger than zero, so that the base station can prioritize the UE highly or lowly when the uplink resources are allocated and adjust the amount of a part of the uplink resources allocated to the UE more reasonably taking the status information of the respective RBs into comprehensive consideration.

### The Second Embodiment

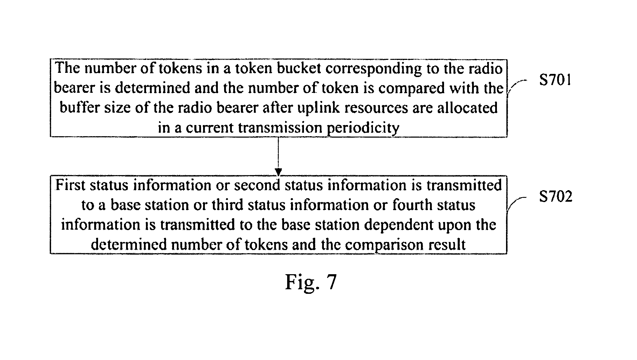

The second embodiment of the invention provides a method for transmitting the status of a radio bearer, which as illustrated in Fig. 7 includes the following operations S701 to S702.

Operation S701. The number of tokens in a token bucket corresponding to the radio bearer is determined and the number of token is compared with the buffer size of the radio bearer after an uplink resource is allocated in a current transmission period.

Operation S702. First status information indicating that the number of tokens is larger than zero and smaller than the buffer size of the radio bearer is transmitted to a base station or second status information indicating that the number of tokens is not larger than zero or not smaller than the buffer size of the radio bearer is transmitted to the base station dependent upon the determined number of tokens and the result of comparison; or

Third status information indicating that the number of tokens is larger than zero and not larger than the buffer size of the radio bearer is transmitted to the base station or fourth status information indicating that the number of tokens is not larger than zero or is larger than the buffer size of the radio bearer is transmitted to the base station dependent upon the determined number of tokens and the result of comparison.

The method for transmitting the status of an RB according to the second embodiment of the invention will be detailed below.

In the second embodiment of the invention, uplink resources available to the UE side are allocated to respective RBs thereof in the same token bucket mechanism as in the first embodiment.

Therefore in the operation S701, the number of tokens in a token bucket corresponding to the radio bearer after the uplink resources are allocated in the current transmission period is the updated number of tokens after a UE allocates the uplink resources.

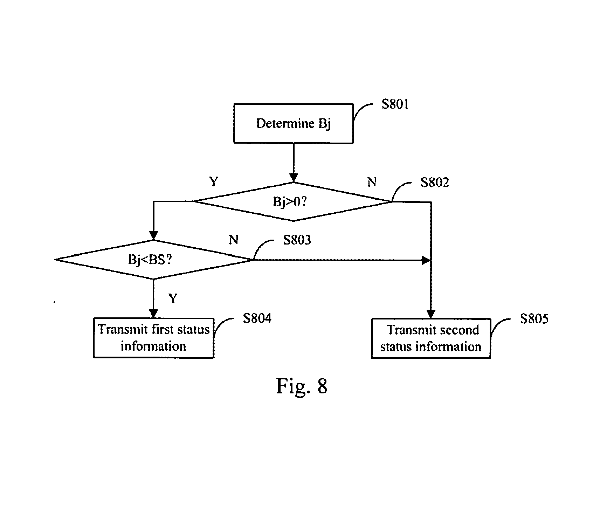

A specific flow of performing the method for transmitting the status of an RB as illustrated in Fig. 7 will be detailed below and as illustrated in Fig. 8 includes the following operations S801 to S805.

Operation S801. Bj is determined.

Operation S802. Whether Bj is larger than zero is determined, and if so, then the operation S803 is executed; otherwise, the operation S805 is executed.

Operation S803. Whether Bj is smaller than BS is determined, and if so, then the operation S804 is executed; otherwise, the operation S805 is executed.

Operation S804. First status information indicating that Bj is larger than zero and smaller than BS is transmitted to a base station.

Operation S805. Second status information indicating that Bj is not larger than zero or not smaller than BS is transmitted to the base station.

In the present second embodiment, alternatively whether Bj is not larger than BS, i.e., "Bj ≤ BS", may be determined in the operation S803.

Correspondingly in the operation S804, third status information indicating that Bj is larger than zero and not larger than BS is transmitted to the base station.

Correspondingly in the operation S805, fourth status information indicating that Bj is not larger than zero or is larger than BS is transmitted to the base station.

Alternatively in the flow of the method as illustrated in Fig. 8, firstly Bj is compared with BS in size, and when Bj is smaller than BS, Bj is further compared with zero, and correspondingly the first or second status information is transmitted.

Particularly in the present second embodiment, the first status information, the second status information, the third status information or the fourth status information may be transmitted in a reserved bit "R" in sub-header fields corresponding to respective radio bearers in an MAC PDU. Particularly:

for each of the RBs, a bit "R" in the sub-header field corresponding to the RB is set to 1, which correspondingly represents the first status information; or the bit "R" is set to 0, which correspondingly represents the second status information; or

a bit "R" in the sub-header field corresponding to the RB is set to 1, which correspondingly represents the third status information; or the bit "R" is set to 0, which correspondingly represents the fourth status information.

The first status information, the second status information, the third status information or the fourth status information is transmitted to the base station when data is transmitted to the base station in the MAC PDU.

Alternatively in another embodiment, a bit "R" is set to 0, which correspondingly represents the first status information or the third status information; or the bit "R" is set to 1, which correspondingly represents the second status information or the fourth status information.

Preferably in the operation S702 and when the first status information, the second status information, the third status information or the fourth status information is transmitted in the flow illustrated in Fig. 8, also the buffer size of a Radio Bearer Group (RBG) composed of several RBs may be transmitted to the base station; or the buffer size of the RBG may be transmitted to the base station when a preset condition is satisfied. Particularly, the respective RBs composing the RBG have similar priorities or the same priority, and the condition to be satisfied can be present variously, for example, such a condition is preset that the buffer size of the RBG is larger than a preset threshold; or the buffer size of the RBG is transmitted periodically to the base station, where the periodicity is an integer multiple of the transmission period.

Particularly, the buffer size of the RBG may be transmitted in an MAC control element field corresponding to the RBG in the MAC PDU.

Also with the method according to the second embodiment of the invention, the base station can prioritize the UE highly or lowly when the uplink resources are allocated and adjust the amount of a part of the uplink resources allocated to the UE more reasonably taking the status information of the respective RBs into comprehensive consideration.

### The Third Embodiment

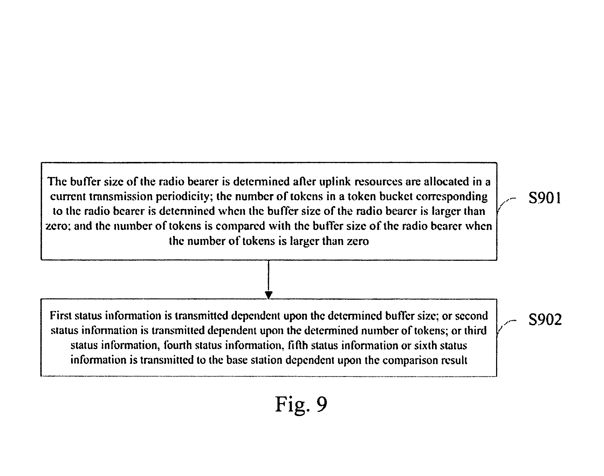

The third embodiment of the invention provides a method for transmitting the status of a radio bearer, which as illustrated in Fig. 9 includes the following operations S901 and S902.

Operation S901. The buffer size of the radio bearer is determined after uplink resources are allocated in a current transmission period; and

The number of tokens in a token bucket corresponding to the radio bearer is determined when the buffer size of the radio bearer is larger than zero; and

The number of tokens is compared with the buffer size of the radio bearer when the number of tokens is larger than zero.

Operation S902. First status information indicating that the buffer size of the radio bearer is not larger than zero is transmitted dependent upon the determined buffer size of the radio bearer; or

Second status information indicating that the number of tokens is not larger than zero and that the buffer size of the radio bearer is larger than zero is transmitted to a base station dependent upon the determined number of tokens; or

Third status information indicating that the number of tokens is larger than zero and smaller than the buffer size of the radio bearer is transmitted to the base station or fourth status information indicating that the number of tokens is larger than zero and that the buffer size of the radio bearer is larger than zero is transmitted to the base station dependent upon the result of comparison; or

Fifth status information indicating that the number of tokens is larger than zero and is not larger than the buffer size of the radio bearer is transmitted to the base station or sixth status information indicating that the number of tokens is larger than zero and than the buffer size of the radio bearer and the buffer size of the radio bear is larger than zero is transmitted to the base station dependent upon the result of comparison.

The method for transmitting the status of an RB according to the third embodiment of the invention will be detailed below.

In the third embodiment of the invention, uplink resources available to the UE side are allocated to respective RBs thereof in the same token bucket mechanism as in the first embodiment.

Therefore in the operation S901, the number of tokens in a token bucket corresponding to the radio bearer after the uplink resources are allocated in the current transmission period is the updated number of tokens after a UE allocates the uplink resources, and the buffer size of the radio bearer is the updated buffer size of the radio bearer after the UE allocates the uplink resources.

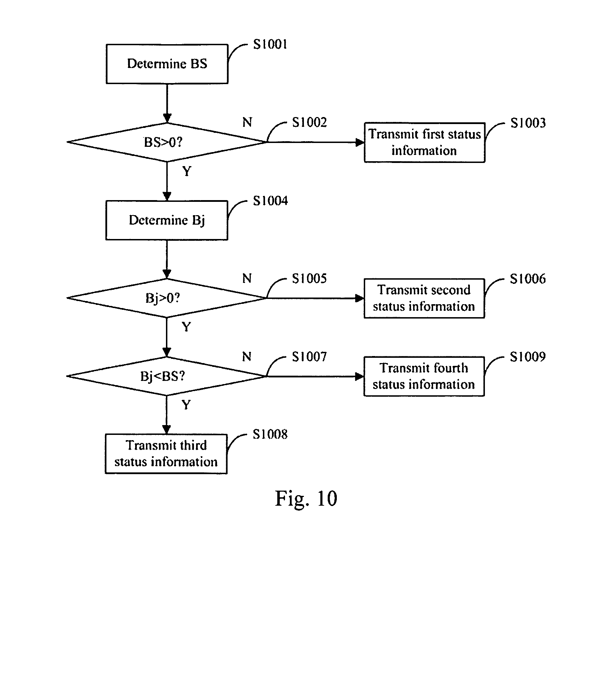

A specific flow of performing the method for transmitting the status of an RB as illustrated in Fig. 9 will be detailed below and as illustrated in Fig. 10 includes the following operations S 1001 to S1009.

Operation S1001. BS is determined.

Operation S1002. Whether BS is larger than zero is determined, and if so, then the operation S1004 is executed; otherwise, the operation S1003 is executed.

Operation S1003. First status information indicating that BS is not larger than zero is transmitted to a base station.

Operation S1004. Bj is determined.

Operation S1005. Whether Bj is larger than zero is determined, and if so, then the operation S1007 is executed; otherwise, the operation S1006 is executed.

Operation S1006. Second status information indicating that Bj is not larger than zero and BS is larger than zero is transmitted to the base station.

Operation S1007. Whether Bj is smaller than BS is determined, and if so, then the operation S1008 is executed; otherwise, the operation S1009 is executed.

Operation S1008. Third status information indicating that Bj is larger than zero and smaller than BS is transmitted to the base station.

Operation S1009. Fourth status information indicating that Bj is larger than zero and not smaller than BS is transmitted to the base station.

In the present third embodiment, alternatively in the operation S1007, whether Bj is not larger than BS, i.e., "by ≤ BS", is determined.

Correspondingly in the operation S 1008, fifth status information indicating that Bj is larger than zero and not larger than BS is transmitted to the base station.

Correspondingly in the operation S1009, sixth status information indicating that Bj is larger than zero and BS is transmitted to the base station.

In the present third embodiment, the first status information, the second status information, the third status information, the fourth status information, the fifth status information or the sixth status information may particularly be transmitted in two reserved bits "R" in sub-header fields corresponding to respective radio bearers in an MAC PDU. Particularly:

for each of the RBs, the first status information, the second status information, the third status information or the fourth status information is represented respectively with the two bits "R" being set to (0, 0), (0, 1), (1, 0) or (1, 1); or

the first status information, the second status information, the fifth status information or the sixth status information is represented respectively with the two bits "R" being set to (0, 0), (0, 1), (1, 0) or (1, 1).

The first status information, the second status information, the third status information, the fourth status information, the fifth status information or the sixth status information is transmitted to the base station when data is transmitted to the base station in the MAC PDU.

In another embodiment, particularly which of the status information is correspondingly represented with the two bits "R" being set to (0, 0), (0, 1), (1, 0) or (1, 1) may be arranged variously.

Preferably in the operation S902 and when the first status information, the second status information, the third status information, the fourth status information, the fifth status information or the sixth status information is transmitted in the flow illustrated in Fig. 10, also the buffer size of a Radio Bearer Group (RBG) composed of several RBs may be transmitted to the base station; or the buffer size of the RBG may be transmitted to the base station when a preset condition is satisfied. Particularly, the respective RBs composing the RBG have similar priorities or the same priority, and the condition to be satisfied may be present variously, for example, such a condition is preset that the buffer size of the RBG is larger than a preset threshold; or the buffer size of the RBG is transmitted periodically to the base station, where the periodicity is an integer multiple of the transmission period.

Particularly, the buffer size of the RBG may be transmitted in an MAC control element field corresponding to the RBG in the MAC PDU.

Also with the method according to the third embodiment of the invention, the base station can prioritize the UE highly or lowly when the uplink resources are allocated and adjust the amount of a part of the uplink resources allocated to the UE more reasonably taking the status information of the respective RBs into comprehensive consideration.

### The Fourth Embodiment

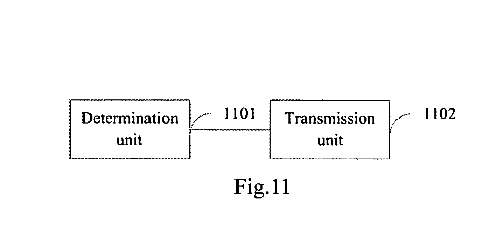

Based upon the same inventive idea, according to a method for transmitting the status of a radio bearer according to the first embodiment of the invention, the fourth embodiment of the invention correspondingly provides a mobile terminal with a structure as illustrated in Fig. 11, which particularly includes:

a determination unit 1101 configured to determine the number of tokens in a token bucket corresponding to a radio bearer after uplink resources are allocated in a current transmission period; and

a transmission unit 1102 configured to transmit first status information indicating that the number of tokens is larger than zero to a base station or transmit second status information indicating that the number of tokens is not larger than zero to the base station dependent upon the determined number of tokens.

Preferably, the first status information or the second status information is transmitted in a reserved bit in a sub-header field corresponding to the radio bearer in an MAC PDU.

Preferably, the transmission unit 1102 is further configured to transmit the buffer size of a radio bearer group to the base station or to transmit the buffer size of the radio bearer group to the base station when a preset condition is satisfied.

Preferably, the buffer size of the radio bearer group is transmitted by the transmission unit 1102 to the base station in an MAC control element field corresponding to the radio bearer group in an MAC PDU.

Preferably, the determination unit 1101 is further configured to compare the number of tokens with the buffer size of the radio bearer when the number of tokens is larger than zero; and

to compare the buffer size of the radio bearer with zero when the number of tokens is not larger than zero.

The transmission unit 1102 is further configured to transmit third status information indicating that the number of tokens is smaller than the buffer size of the radio bearer to the base station or transmit fourth status information indicating that the number of tokens is not smaller than the buffer size of the radio bearer to the base station; or

to transmit fifth status information indicating that the number of tokens is not larger than the buffer size of the radio bearer to the base station or transmit sixth status information indicating that the number of tokens is larger than the buffer size of the radio bearer to the base station upon transmission of the first status information dependent upon the result of comparison; and

to transmit seventh status information indicating that the buffer size of the radio bearer is larger than zero to the base station or transmit eighth status information indicating that the buffer size of the radio bearer is not larger than zero to the base station upon transmission of the second status information dependent upon the result of comparison.

Preferably, the transmission unit 1102 is configured to transmit the third status information, the fourth status information, the fifth status information, the sixth status information, the seventh status information or the eighth status information in another reserved bit in a sub-header field corresponding to the radio bearer in an MAC PDU

### The Fifth Embodiment

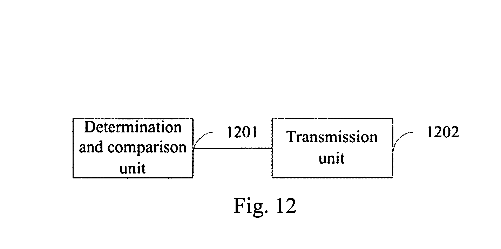

According to a method for transmitting the status of a radio bearer, the fifth embodiment of the invention correspondingly provides a mobile terminal with a structure as illustrated in the schematic diagram of Fig. 12, which particularly includes:

a determination and comparison unit 1201 configured to determine the number of tokens in a token bucket corresponding to a radio bearer and compare the number of tokens with the buffer size of the radio bearer after uplink resources are allocated in a current transmission period; and

a transmission unit 1202 configured to transmit first status information indicating that the number of tokens is larger than zero and smaller than the buffer size of the radio bearer to a base station or transmit second status information indicating that the number of tokens is not larger than zero or not smaller than the buffer size of the radio bearer to the base station dependent upon the determined number of tokens and the result of comparison; or

to transmit third status information indicating that the number of tokens is larger than zero and not larger than the buffer size of the radio bearer to the base station or transmit fourth status information indicating that the number of tokens is not larger than zero or is larger than the buffer size of the radio bearer to the base station dependent upon the determined number of tokens and the result of comparison.

Preferably, the transmission unit 1202 is configured to transmit the first status information, the second status information, the third status information or the fourth status information in a reserved bit in a sub-header field corresponding to the radio bearer in an MAC PDU.

Preferably, the transmission unit 1202 is further configured to transmit the buffer size of a radio bearer group to the base station or to transmit the buffer size of the radio bearer group to the base station when a preset condition is satisfied.

Preferably, the buffer size of the radio bearer group is transmitted by the transmission unit 1202 to the base station in an MAC control element field corresponding to the radio bearer in an MAC PDU.

### The Sixth Embodiment

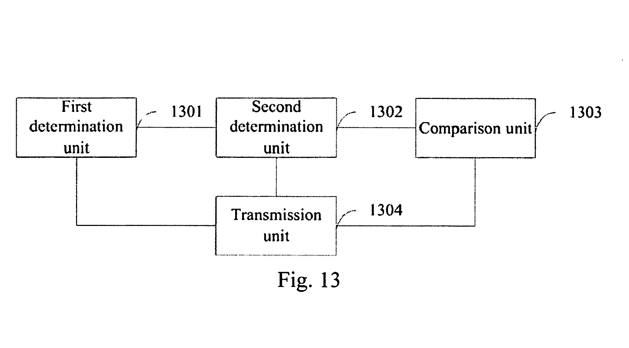

According to the method for transmitting the status of a radio bearer according to the third embodiment of the invention, the sixth embodiment of the invention correspondingly provides a mobile terminal with a structure as illustrated in the schematic diagram of Fig. 13, which particularly includes:
a first determination unit 1301 configured to determine the buffer size of a radio bearer after uplink resources are allocated in a current transmission period;
a second determination unit 1302 configured to determine the number of tokens in a token bucket corresponding to the radio bearer when the buffer size of the radio bearer determined by the first determination unit 1301 is larger than zero;
a comparison unit 1303 configured to compare the number of tokens with the buffer size of the radio bearer when the number of tokens determined by the second determination unit 1302 is larger than zero; and
a transmission unit 1304 configured to transmit first status information indicating that the buffer size of the radio bearer is not larger than zero dependent upon the buffer size of the radio bearer determined by the first determination unit 1301; or
to transmit second status information indicating that the number of tokens is not larger than zero and the buffer size of the radio bearer is larger than zero to a base station dependent upon the number of tokens determined by the second determination unit 1302; or
to transmit third status information indicating that the number of tokens is larger than zero and smaller than the buffer size of the radio bearer to the base station or transmit fourth status information indicating that the number of tokens is larger than zero and not smaller than the buffer size of the radio bearer and the buffer size of the radio bearer is larger than zero to the base station dependent upon the result of comparison by the comparison unit 1303; or
to transmit fifth status information indicating that the number of tokens is larger than zero and not larger than the buffer size of the radio bearer to the base station or transmit sixth status information indicating that the number of tokens is larger than zero and than the buffer size of the radio bearer and the buffer size of the radio bearer is larger than zero to the base station dependent upon the result of comparison by the comparison unit 1303.

Preferably, the transmission unit 1304 is configured to transmit the first status information, the second status information, the third status information, the fourth status information, the fifth status information or the sixth status information in a reserved bit in a sub-header field corresponding to the radio bearer in an MAC PDU.

Preferably, the transmission unit 1304 is further configured to transmit the buffer size of a radio bearer group to the base station; or
to transmit the buffer size of the radio bearer group to the base station when a preset condition is satisfied.

Preferably, the transmission unit 1304 is further configured to transmit the buffer size of the radio bearer group to the base station in an MAC control element field corresponding to the radio bearer in an MAC PDU.

In summary, a solution according to the embodiments of the invention includes: determining the number of tokens in a token bucket corresponding to a radio bearer after uplink resources are allocated in a current transmission period; and transmitting first status information indicating that the number of tokens is larger than zero to a base station or transmitting second status information indicating that the number of tokens is not larger than zero to the base station dependent upon the determined number of tokens. With the solution according to the embodiments of the invention, the precision of the RB status reported from a UE can be improved so that the base station can allocate the uplink resources more reasonably, thus improving the efficiency of utilizing the uplink resources.

Evidently those skilled in the art may make various modifications and variations to the invention without departing from the scope of the invention. Thus the invention is also intended to encompass these modifications and variations thereto as long as the modifications and variations come into the scope of the claims appended to the invention and their equivalents.

## Claims

1. A method for transmitting the status of a radio bearer by a mobile terminal, comprising:
determining (S501, S601) the number of tokens in a token bucket corresponding to the radio bearer after uplink resources are allocated in a current transmission period; and
when the number of tokens is larger than zero:
transmitting (S502, S603) first status information indicating that the number of tokens is larger than zero to a base station and comparing (S605) the number of tokens with a buffer size of the radio bearer; and
dependent upon a result of the comparing between the number of tokens and the buffer size of the radio bearer:
transmitting fifth status information indicating that the number of tokens is not larger than the buffer size of the radio bearer to the base station or transmitting sixth status information indicating that the number of tokens is larger than the buffer size of the radio bearer to the base station; or
when the number of tokens is not larger than zero:
transmitting (S502, S604) second status information indicating that the number of tokens is not larger than zero to the base station and comparing (S608) the buffer size of the radio bearer with zero; and
dependent upon a result of the comparing between the buffer size of the radio bearer and zero:
transmitting (S609) seventh status information indicating that the buffer size of the radio bearer is larger than zero to the base station or transmitting (S610) eighth status information indicating that the buffer size of the radio bearer is not larger than zero to the base station.

2. The method of claim 1, further comprising:
transmitting a buffer size of a radio bearer group to the base station; or
transmitting the buffer size of the radio bearer group to the base station when a preset condition is satisfied.

3. The method of claim 1, wherein the first status information or the second status information is transmitted in a reserved bit in a sub-header field corresponding to the radio bearer in a Media Access Control Protocol Data Unit, MAC PDU; and/or
the fifth status information, the sixth status information, the seventh status information or the eighth status information is transmitted in another reserved bit in a sub-header field corresponding to the radio bearer in a Media Access Control Protocol Data Unit, MAC PDU.

4. A method for transmitting the status of a radio bearer by a mobile terminal, comprising:
determining (S801, S701) the number of tokens in a token bucket corresponding to the radio bearer and comparing (S803, S701) the number of tokens with a buffer size of the radio bearer after uplink resources are allocated in a current transmission period; and
transmitting (S702) third status information indicating that the number of tokens is larger than zero and not larger than the buffer size of the radio bearer to the base station or transmitting (S702) fourth status information indicating that the number of tokens is not larger than zero or is larger than the buffer size of the radio bearer to the base station dependent upon the determined number of tokens and the result of the comparing.

5. The method of claim 4, wherein the third status information or the fourth status information is transmitted in a reserved bit in a sub-header field corresponding to the radio bearer in a Media Access Control Protocol Data Unit, MAC PDU.

6. The method of claim 4 or 5, further comprising:
transmitting a buffer size of a radio bearer group to the base station; or
transmitting the buffer size of the radio bearer group to the base station when a preset condition is satisfied.

7. A method for transmitting the status of a radio bearer by a mobile terminal, comprising:
determining (S901, S1001) a buffer size of the radio bearer after uplink resources are allocated in a current transmission period;
determining (S901, S1004) the number of tokens in a token bucket corresponding to the radio bearer when the buffer size of the radio bearer is larger than zero;
comparing (S901, S1007) the number of tokens with the buffer size of the radio bearer when the number of tokens is larger than zero; and
transmitting (S902, S1003) first status information indicating that the buffer size of the radio bearer is not larger than zero dependent upon the determined buffer size of the radio bearer; or
transmitting (S902, S1006) second status information indicating that the number of tokens is not larger than zero and the buffer size of the radio bearer is larger than zero to a base station dependent upon the determined number of tokens; or
transmitting (S902) fifth status information indicating that the number of tokens is larger than zero and not larger than the buffer size of the radio bearer to the base station or transmitting (S902) sixth status information indicating that the number of tokens is larger than zero and than the buffer size of the radio bearer and the buffer size of the radio bearer is larger than zero to the base station dependent upon the result of the comparing.

8. The method of claim 7, wherein the first status information, the second status information, the fifth status information or the sixth status information is transmitted in a reserved bit in a sub-header field corresponding to the radio bearer in a Media Access Control Protocol Data Unit, MAC PDU.

9. The method of claim 7 or 8, further comprising:
transmitting a buffer size of a radio bearer group to the base station; or
transmitting the buffer size of the radio bearer group to the base station when a preset condition is satisfied.

10. A mobile terminal, comprising:
a determination unit (1101) configured to determine the number of tokens in a token bucket corresponding to a radio bearer after uplink resources are allocated in a current transmission period, compare the number of tokens with a buffer size of the radio bearer when the number of tokens is larger than zero, and compare the buffer size of the radio bearer with zero when the number of tokens is not larger than zero; and
a transmission unit (1102) configured, when the number of tokens is larger than zero, to:
transmit first status information indicating that the number of tokens is larger than zero to a base station; and
dependent upon a result of the comparison between the number of tokens and the buffer size of the radio bearer:
transmit fifth status information indicating that the number of tokens is not larger than the buffer size of the radio bearer to the base station or transmit sixth status information indicating that the number of tokens is larger than the buffer size of the radio bearer to the base station;
or
the transmission unit (1102) configured, when the number of tokens is not larger than zero, to:
transmit second status information indicating that the number of tokens is not larger than zero to the base station; and
dependent upon a result of the comparison between the buffer size of the radio bearer and zero:
transmit seventh status information indicating that the buffer size of the radio bearer is larger than zero to the base station or transmit eighth status information indicating that the buffer size of the radio bearer is not larger than zero to the base station.

11. The mobile terminal of claim 10, wherein the transmission unit (1102) is further configured to transmit a buffer size of a radio bearer group to the base station; or
to transmit the buffer size of the radio bearer group to the base station when a preset condition is satisfied.

12. The mobile terminal of claim 10, wherein the transmission unit (1102) is configured to transmit the first status information or the second status information in a reserved bit in a sub-header field corresponding to the radio bearer in a Media Access Control Protocol Data Unit, MAC PDU; and/or
the transmission unit (1102) is configured to transmit the fifth status information, the sixth status information, the seventh status information or the eighth status information in another reserved bit in a sub-header field corresponding to the radio bearer in a Media Access Control Protocol Data Unit, MAC PDU.

13. A mobile terminal, comprising:
a determination and comparison unit (1201) configured to determine the number of tokens in a token bucket corresponding to a radio bearer and compare the number of tokens with a buffer size of the radio bearer after uplink resources are allocated in a current transmission period; and
a transmission unit (1202) configured to transmit third status information indicating that the number of tokens is larger than zero and not larger than the buffer size of the radio bearer to the base station or transmit fourth status information indicating that the number of tokens is not larger than zero or is larger than the buffer size of the radio bearer to the base station dependent upon the determined number of tokens and the result of the comparison.

14. The mobile terminal of claim 13, wherein the transmission unit (1202) is configured to transmit the third status information or the fourth status information in a reserved bit in a sub-header field corresponding to the radio bearer in a Media Access Control Protocol Data Unit, MAC PDU.

15. The mobile terminal of claim 13 or 14, wherein the transmission unit (1202) is further configured to transmit a buffer size of a radio bearer group to the base station; or
to transmit the buffer size of the radio bearer group to the base station when a preset condition is satisfied.

16. A mobile terminal, comprising:
a first determination unit (1301) configured to determine a buffer size of a radio bearer after uplink resources are allocated in a current transmission period;
a second determination unit (1302) configured to determine the number of tokens in a token bucket corresponding to the radio bearer when the buffer size of the radio bearer determined by the first determination unit (1301) is larger than zero;
a comparison unit (1303) configured to compare the number of tokens with the buffer size of the radio bearer when the number of tokens determined by the second determination unit (1302) is larger than zero; and
a transmission unit (1304) configured to transmit first status information indicating that the buffer size of the radio bearer is not larger than zero dependent upon the buffer size of the radio bearer determined by the first determination unit (1301); or
to transmit second status information indicating that the number of tokens is not larger than zero and that the buffer size of the radio bearer is larger than zero to a base station dependent upon the number of tokens determined by the second determination unit (1302); or
to transmit fifth status information indicating that the number of tokens is larger than zero and not larger than the buffer size of the radio bearer to the base station or transmit sixth status information indicating that the number of tokens is larger than zero and than the buffer size of the radio bearer and the buffer size of the radio bearer is larger than zero to the base station dependent upon the result of the comparison by the comparison unit (1303).

17. The mobile terminal of claim 16, wherein the transmission unit (1304) is configured to transmit the first status information, the second status information, the fifth status information or the sixth status information in a reserved bit in a sub-header field corresponding to the radio bearer in a Media Access Control Protocol Data Unit, MAC PDU.

18. The mobile terminal of claim 16 or 17, wherein the transmission unit (1304) is further configured to transmit a buffer size of a radio bearer group to the base station; or
to transmit the buffer size of the radio bearer group to the base station when a preset condition is satisfied.

## Patentansprüche

1. Verfahren zum Übertragen des Status eines Funkträgers durch ein mobiles Endgerät, umfassend:
Ermitteln (S501, S601) der Anzahl an Token in einem Token-Bucket, die dem Funkträger entspricht, nachdem Uplink-Ressourcen in einer aktuellen Übertragungsperiode zugeteilt wurden; und
wenn die Anzahl an Token größer als Null ist:
Übertragen (S502, S603) einer ersten Statusinformation, die angibt, dass die Anzahl an Token größer als Null ist, an eine Basisstation und Vergleichen (S605) der Anzahl an Token mit einer Puffergröße des Funkträgers; und
in Abhängigkeit eines Ergebnisses des Vergleichs zwischen der Anzahl an Token und der Puffergröße des Funkträgers:
Übertragen einer fünften Statusinformation, die angibt, dass die Anzahl an Token nicht größer als die Puffergröße des Funkträgers ist, an die Basisstation oder Übertragen einer sechsten Statusinformation, die angibt, dass die Anzahl an Token größer als die Puffergröße des Funkträgers ist, an die Basisstation;
oder
wenn die Anzahl an Token nicht größer als Null ist:
Übertragen (S502, S604) einer zweiten Statusinformation, die angibt, dass die Anzahl an Token nicht größer als Null ist, an die Basisstation und Vergleichen (S608) der Puffergröße des Funkträgers mit Null; und
in Abhängigkeit eines Ergebnisses des Vergleichs zwischen der Puffergröße des Funkträgers und Null:
Übertragen (S609) einer siebten Statusinformation, die angibt, dass die Puffergröße des Funkträgers größer als Null ist, an die Basisstation oder Übertragen (S610) einer achten Statusinformation, die angibt, dass die Puffergröße des Funkträgers nicht größer als Null ist, an die Basisstation.

2. Verfahren nach Anspruch 1, das ferner umfasst:
Übertragen einer Puffergröße einer Funkträgergruppe an die Basisstation; oder
Übertragen der Puffergröße der Funkträgergruppe an die Basisstation, wenn eine vorab festgelegte Bedingung erfüllt ist.

3. Verfahren nach Anspruch 1,
wobei die erste Statusinformation oder die zweite Statusinformation in einem reservierten Bit in einem Sub-Header-Feld, das dem Funkträger entspricht, in einer Medienzugriffskontroll-Protokolldateneinheit, MAC PDU, übertragen wird; und/oder
die fünfte Statusinformation, die sechste Statusinformation, die siebte Statusinformation oder die achte Statusinformation in einem anderen reservierten Bit in einem Sub-Header-Feld, das dem Funkträger entspricht, in einer Medienzugriffskontroll-Protokolldateneinheit, MAC PDU, übertragen wird.

4. Verfahren zum Übertragen des Status eines Funkträgers durch ein mobiles Endgerät, umfassend:
Ermitteln (S801, S701), der Anzahl an Token in einem Token-Bucket, die dem Funkträger entspricht, und Vergleichen (S803, S701) der Anzahl an Token mit einer Puffergröße des Funkträgers, nachdem Uplink-Ressourcen in einer aktuellen Übertragungsperiode zugeteilt wurden; und
Übertragen (S702) einer dritten Statusinformation, die angibt, dass die Anzahl an Token größer als Null und nicht größer als die Puffergröße des Funkträgers ist, an die Basisstation, oder Übertragen (S702) einer vierten Statusinformation, die angibt, dass die Anzahl an Token nicht größer als Null oder größer als die Puffergröße des Funkträgers ist, an die Basisstation, in Abhängigkeit der ermittelten Anzahl an Token und des Ergebnisses des Vergleichs.

5. Verfahren nach Anspruch 4,
wobei die dritte Statusinformation oder die vierte Statusinformation in einem reservierten Bit in einem Sub-Header-Feld, das dem Funkträger entspricht, in einer Medienzugriffskontroll-Protokolldateneinheit, MAC PDU, übertragen wird.

6. Verfahren nach Anspruch 4 oder 5, ferner umfassend:
Übertragen einer Puffergröße einer Funkträgergruppe an die Basisstation; oder
Übertragen der Puffergröße der Funkträgergruppe an die Basisstation, wenn eine vorab festgelegte Bedingung erfüllt ist.

7. Verfahren zum Übertragen des Status eines Funkträgers durch ein mobiles Endgerät, umfassend:
Ermitteln (S901, S1001) einer Puffergröße des Funkträgers, nachdem Up-link-Ressourcen in einer aktuellen Übertragungsperiode zugeteilt wurden;
Ermitteln (S901, S1004) der Anzahl an Token in einem Token-Bucket, die dem Funkträger entspricht, wenn die Puffergröße des Funkträgers größer als Null ist;
Vergleichen (S901, S1007) der Anzahl an Token mit der Puffergröße des Funkträgers, wenn die Anzahl an Token größer als Null ist; und
Übertragen (S902, S1003) einer ersten Statusinformation, die angibt, dass die Puffergröße des Funkträgers nicht größer als Null ist, in Abhängigkeit der ermittelten Puffergröße des Funkträgers; oder
Übertragen (S902, S1006) einer zweiten Statusinformation, die angibt, dass die Anzahl an Token nicht größer als Null ist und die Puffergröße des Funkträgers größer als Null ist, an eine Basisstation in Abhängigkeit der ermittelten Anzahl an Token; oder
Übertragen (S902) einer fünften Statusinformation, die angibt, dass die Anzahl an Token größer als Null und nicht größer als die Puffergröße des Funkträgers ist, an die Basisstation, oder Übertragen (S902) einer sechsten Statusinformation, die angibt, dass die Anzahl an Token größer als Null und als die Puffergröße des Funkträgers ist und die Puffergröße des Funkträgers größer als Null ist, an die Basisstation in Abhängigkeit des Ergebnisses des Vergleichs.

8. Verfahren nach Anspruch 7,
wobei die erste Statusinformation, die zweite Statusinformation, die fünfte Statusinformation oder die sechste Statusinformation in einem reservierten Bit in einem Sub-Header-Feld, das dem Funkträger entspricht, in einer Medienzugriffskontroll-Protokolldateneinheit, MAC PDU, übertragen wird.

9. Verfahren nach Anspruch 7 oder 8, das ferner umfasst:
Übertragen einer Puffergröße einer Funkträgergruppe an die Basisstation; oder
Übertragen der Puffergröße der Funkträgergruppe an die Basisstation, wenn eine vorab festgelegte Bedingung erfüllt ist.

10. Mobiles Endgerät, umfassend:
eine Ermittlungseinheit (1101), ausgestaltet zum Ermitteln der Anzahl an Token in einem Token-Bucket, die einem Funkträger entspricht, nachdem Uplink-Ressourcen in einer aktuellen Übertragungsperiode zugeteilt wurden, Vergleichen der Anzahl an Token mit einer Puffergröße des Funkträgers, wenn die Anzahl an Token größer als Null ist, und Vergleichen der Puffergröße des Funkträgers mit Null, wenn die Anzahl an Token nicht größer als Null ist; und
eine Übertragungseinheit (1102), ausgestaltet zum, wenn die Anzahl an Token größer als Null ist:
Übertragen einer ersten Statusinformation, die angibt, dass die Anzahl an Token größer als Null ist, an eine Basisstation; und
in Abhängigkeit eines Ergebnisses des Vergleichs zwischen der Anzahl an Token und der Puffergröße des Funkträgers:
Übertragen einer fünften Statusinformation, die angibt, dass die Anzahl an Token nicht größer als die Puffergröße des Funkträgers ist, an die Basisstation oder Übertragen einer sechsten Statusinformation, die angibt, dass die Anzahl an Token größer als die Puffergröße des Funkträgers ist, an die Basisstation;
oder
wobei die Übertragungseinheit (1102) ausgestaltet ist zum, wenn die Anzahl an Token nicht größer als Null ist:
Übertragen einer zweiten Statusinformation, die angibt, dass die Anzahl an Token nicht größer als Null ist, an die Basisstation; und
in Abhängigkeit eines Ergebnisses des Vergleichs zwischen der Puffergröße des Funkträgers und Null:
Übertragen einer siebten Statusinformation, die angibt, dass die Puffergröße des Funkträgers größer als Null ist, an die Basisstation oder Übertragen einer achten Statusinformation, die angibt, dass die Puffergröße des Funkträgers nicht größer als Null ist, an die Basisstation.

11. Mobiles Endgerät nach Anspruch 10,
wobei die Übertragungseinheit (1102) ferner ausgestaltet ist zum Übertragen einer Puffergröße einer Funkträgergruppe an die Basisstation; oder zum Übertragen der Puffergröße der Funkträgergruppe an die Basisstation, wenn eine vorab festgelegte Bedingung erfüllt ist.

12. Mobiles Endgerät nach Anspruch 10,
wobei die Übertragungseinheit (1102) ausgestaltet ist, um die erste Statusinformation oder die zweite Statusinformation in einem reservierten Bit in einem Sub-Header-Feld, das dem Funkträger entspricht, in einer Medienzugriffskontroll-Protokolldateneinheit, MAC PDU, zu übertragen; und/oder die Übertragungseinheit (1102) ausgestaltet ist, um die fünfte Statusinformation, die sechste Statusinformation, die siebte Statusinformation oder die achte Statusinformation in einem anderen reservierten Bit in einem Sub-Header-Feld, das dem Funkträger entspricht, in einer Medienzugriffskontroll-Protokolldateneinheit, MAC PDU, zu übertragen.

13. Mobiles Endgerät, umfassend:
eine Ermittlungs- und Vergleichseinheit (1201), ausgestaltet zum Ermitteln der Anzahl an Token in einem Token-Bucket, die einem Funkträger entspricht, und Vergleichen der Anzahl an Token mit einer Puffergröße des Funkträgers, nachdem Uplink-Ressourcen in einer aktuellen Übertragungsperiode zugeteilt wurden; und
eine Übertragungseinheit (1202), ausgestaltet zum Übertragen einer dritten Statusinformation, die angibt, dass die Anzahl an Token größer als Null und nicht größer als die Puffergröße des Funkträgers ist, an die Basisstation, oder Übertragen einer vierten Statusinformation, die angibt, dass die Anzahl an Token nicht größer als Null ist oder größer als die Puffergröße des Funkträgers ist, an die Basisstation in Abhängigkeit der ermittelten Anzahl an Token und des Ergebnisses des Vergleichs.

14. Mobiles Endgerät nach Anspruch 13,
wobei die Übertragungseinheit (1202) ausgestaltet ist, um die dritte Statusinformation oder die vierte Statusinformation in einem reservierten Bit in einem Sub-Header-Feld, das dem Funkträger entspricht, in einer Medienzugriffskontroll-Protokolldateneinheit, MAC PDU, zu übertragen.

15. Mobiles Endgerät nach Anspruch 13 oder 14,
wobei die Übertragungseinheit (1202) ferner ausgestaltet ist zum Übertragen einer Puffergröße einer Funkträgergruppe an die Basisstation; oder zum Übertragen der Puffergröße der Funkträgergruppe an die Basisstation, wenn eine vorab festgelegte Bedingung erfüllt ist.

16. Mobiles Endgerät, umfassend:
eine erste Ermittlungseinheit (1301), ausgestaltet zum Ermitteln einer Puffergröße eines Funkträgers, nachdem Uplink-Ressourcen in einer aktuellen Übertragungsperiode zugeteilt wurden;
eine zweite Ermittlungseinheit (1302), ausgestaltet zum Ermitteln der Anzahl an Token in einem Token-Bucket, die dem Funkträger entspricht, wenn die durch die erste Ermittlungseinheit (1301) ermittelte Puffergröße des Funkträgers größer als Null ist;
eine Vergleichseinheit (1303), ausgestaltet zum Vergleichen der Anzahl an Token mit der Puffergröße des Funkträgers, wenn die durch die zweite Ermittlungseinheit (1302) ermittelte Anzahl an Token größer als Null ist; und
eine Übertragungseinheit (1304), ausgestaltet zum Übertragen einer ersten Statusinformation, die angibt, dass die Puffergröße des Funkträgers nicht größer als Null ist, in Abhängigkeit der durch die erste Ermittlungseinheit (1301) ermittelten Puffergröße des Funkträgers; oder
zum Übertragen einer zweiten Statusinformation, die angibt, dass die Anzahl an Token nicht größer als Null ist und dass die Puffergröße des Funkträgers größer als Null ist, an eine Basisstation in Abhängigkeit der durch die zweite Ermittlungseinheit (1302) ermittelten Anzahl an Token; oder
zum Übertragen einer fünften Statusinformation, die angibt, dass die Anzahl an Token größer als Null und nicht größer als die Puffergröße des Funkträgers ist, an die Basisstation, oder Übertragen einer sechsten Statusinformation, die angibt, dass die Anzahl an Token größer als Null und als die Puffergröße des Funkträgers ist und die Puffergröße des Funkträgers größer als Null ist, an die Basisstation in Abhängigkeit des Ergebnisses des Vergleichs durch die Vergleichseinheit (1303).

17. Mobiles Endgerät nach Anspruch 16,
wobei die Übertragungseinheit (1304) ausgestaltet ist, um die erste Statusinformation, die zweite Statusinformation, die fünfte Statusinformation oder die sechste Statusinformation in einem reservierten Bit in einem Sub-Header-Feld, das dem Funkträger entspricht, in einer Medienzugriffskontroll-Protokolldateneinheit, MAC PDU, zu übertragen.

18. Mobiles Endgerät nach Anspruch 16 oder 17,
wobei die Übertragungseinheit (1304) ferner ausgestaltet ist zum Übertragen einer Puffergröße einer Funkträgergruppe an die Basisstation; oder zum Übertragen der Puffergröße der Funkträgergruppe an die Basisstation, wenn eine vorab festgelegte Bedingung erfüllt ist.

## Revendications

1. Procédé pour transmettre le statut d'un support radio par un terminal mobile, comprenant :
la détermination (S501, S601) du nombre de jetons dans un seau à jetons correspondant au support radio après que des ressources de liaison montante sont allouées dans une période de transmission en cours ; et
lorsque le nombre de jetons est supérieur à zéro :
la transmission (S502, S603) d'une première information de statut indiquant que le nombre de jetons est supérieur à zéro à une station de base et la comparaison (S605) du nombre de jetons à une taille de tampon du support radio ; et
en fonction d'un résultat de la comparaison entre le nombre de jetons et la taille de tampon du support radio :
la transmission d'une cinquième information de statut indiquant que le nombre de jetons n'est pas supérieur à la taille de tampon du support radio ou la transmission d'une sixième information de statut indiquant que le nombre de jetons est supérieur à la taille de tampon du support radio à la station de base ;
ou
lorsque le nombre de jetons n'est pas supérieur à zéro :
la transmission (S502, S604) d'une deuxième information de statut indiquant que le nombre de jetons n'est pas supérieur à zéro à la station de base et la comparaison (S608) de la taille de tampon du support radio à zéro ; et
en fonction d'un résultat de la comparaison entre la taille de tampon du support radio et zéro :
la transmission (S609) d'une septième information de statut indiquant que la taille de tampon du support radio est supérieure à zéro à la station de base ou la transmission (S610) d'une huitième information de statut indiquant que la taille de tampon du support radio n'est pas supérieure à zéro à la station de base.

2. Procédé selon la revendication 1, comprenant en outre :
la transmission d'une taille de tampon d'un groupe de supports radio à la station de base ; ou
la transmission de la taille de tampon du groupe de supports radio à la station de base lorsqu'une condition préétablie est satisfaite.

3. Procédé selon la revendication 1, dans lequel la première information de statut ou la deuxième information de statut est transmise dans un bit réservé dans un champ de sous-en-tête correspondant au support radio dans une Unité de données de protocole de Contrôle d'accès au média, PDU MAC ; et/ou
la cinquième information de statut, la sixième information de statut, la septième information de statut ou la huitième information de statut est transmise dans un autre bit réservé dans un champ de sous-en-tête correspondant au support radio dans une Unité de données de protocole de Contrôle d'accès au média, PDU MAC.

4. Procédé pour transmettre le statut d'un support radio par un terminal mobile, comprenant :
la détermination (S801, S701) du nombre de jetons dans un seau à jetons correspondant au support radio et la comparaison (S803, S701) du nombre de jetons à une taille de tampon du support radio après que des ressources de liaison montante sont allouées dans une période de transmission en cours ; et
la transmission (S702) d'une troisième information de statut indiquant que le nombre de jetons est supérieur à zéro et n'est pas supérieur à la taille de tampon du support radio à la station de base ou la transmission (S702) d'une quatrième information de statut indiquant que le nombre de jetons n'est pas supérieur à zéro ou est supérieur à la taille de tampon du support radio à la station de base en fonction du nombre déterminé de jetons et du résultat de la comparaison.

5. Procédé selon la revendication 4, dans lequel la troisième information de statut ou la quatrième information de statut est transmise dans un bit réservé dans un champ de sous-en-tête correspondant au support radio dans une Unité de données de protocole de Contrôle d'accès au média, PDU MAC.

6. Procédé selon la revendication 4 ou 5, comprenant en outre :
la transmission d'une taille de tampon d'un groupe de supports radio à la station de base ; ou
la transmission de la taille de tampon du groupe de supports radio à la station de base lorsqu'une condition préétablie est satisfaite.

7. Procédé pour transmettre le statut d'un support radio par un terminal mobile, comprenant :
la détermination (S901, S1001) d'une taille de tampon du support radio après que des ressources de liaison montante sont allouées dans une période de transmission en cours ;
la détermination (S901, S1004) du nombre de jetons dans un seau à jetons correspondant au support radio lorsque la taille de tampon du support radio est supérieure à zéro ;
la comparaison (S901, S1007) du nombre de jetons à la taille de tampon du support radio lorsque le nombre de jetons est supérieur à zéro ; et
la transmission (S902, S1003) d'une première information de statut indiquant que la taille de tampon du support radio n'est pas supérieure à zéro en fonction de la taille de tampon déterminée du support radio ; ou
la transmission (S902, S1006) d'une deuxième information de statut indiquant que le nombre de jetons n'est pas supérieur à zéro et la taille de tampon du support radio est supérieure à zéro à une station de base en fonction du nombre déterminé de jetons ; ou
la transmission (S902) d'une cinquième information de statut indiquant que le nombre de jetons est supérieur à zéro et n'est pas supérieur à la taille de tampon du support radio à la station de base ou la transmission (S902) d'une sixième information de statut indiquant que le nombre de jetons est supérieur à zéro et à la taille de tampon du support radio et la taille de tampon du support radio est supérieure à zéro à la station de base en fonction du résultat de la comparaison.

8. Procédé selon la revendication 7, dans lequel la première information de statut, la deuxième information de statut, la cinquième information de statut ou la sixième information de statut est transmise dans un bit réservé dans un champ de sous-en-tête correspondant au support radio dans une Unité de données de protocole de Contrôle d'accès au média, PDU MAC.

9. Procédé selon la revendication 7 ou 8, comprenant en outre :
la transmission d'une taille de tampon d'un groupe de supports radio à la station de base ; ou
la transmission de la taille de tampon du groupe de supports radio à la station de base lorsqu'une condition préétablie est satisfaite.

10. Terminal mobile, comprenant :
une unité de détermination (1101) configurée pour déterminer le nombre de jetons dans un seau à jetons correspondant à un support radio après que des ressources de liaison montante sont allouées dans une période de transmission en cours, comparer le nombre de jetons à une taille de tampon du support radio lorsque le nombre de jetons est supérieur à zéro, et comparer la taille de tampon du support radio à zéro lorsque le nombre de jetons n'est pas supérieur à zéro ; et
une unité de transmission (1102) configurée, lorsque le nombre de jetons est supérieur à zéro, pour :
transmettre une première information de statut indiquant que le nombre de jetons est supérieur à zéro à une station de base ; et
en fonction d'un résultat de la comparaison entre le nombre de jetons et la taille de tampon du support radio :
transmettre une cinquième information de statut indiquant que le nombre de jetons n'est pas supérieur à la taille de tampon du support radio à la station de base ou transmettre une sixième information de statut indiquant que le nombre de jetons est supérieur à la taille de tampon du support radio à la station de base ;
ou
l'unité de transmission (1102) configurée, lorsque le nombre de jetons n'est pas supérieur à zéro, pour :
transmettre une deuxième information de statut indiquant que le nombre de jetons n'est pas supérieur à zéro à la station de base ; et
en fonction d'un résultat de la comparaison entre la taille de tampon du support radio et zéro :
transmettre une septième information de statut indiquant que la taille de tampon du support radio est supérieure à zéro à la station de base ou transmettre une huitième information de statut indiquant que la taille de tampon du support radio n'est pas supérieure à zéro à la station de base.

11. Terminal mobile selon la revendication 10, dans lequel l'unité de transmission (1102) est en outre configurée pour transmettre une taille de tampon d'un groupe de supports radio à la station de base ; ou
pour transmettre la taille de tampon du groupe de supports radio à la station de base lorsqu'une condition préétablie est satisfaite.

12. Terminal mobile selon la revendication 10, dans lequel l'unité de transmission (1102) est configurée pour transmettre la première information de statut ou la deuxième information de statut dans un bit réservé dans un champ de sous-en-tête correspondant au support radio dans une Unité de données de protocole de Contrôle d'accès au média, PDU MAC ; et/ou
l'unité de transmission (1102) est configurée pour transmettre la cinquième information de statut, la sixième information de statut, la septième information de statut ou la huitième information de statut dans un autre bit réservé dans un champ de sous-en-tête correspondant au support radio dans une Unité de données de protocole de Contrôle d'accès au média, PDU MAC.

13. Terminal mobile, comprenant :
une unité de détermination et de comparaison (1201) configurée pour déterminer le nombre de jetons dans un seau à jetons correspondant à un support radio et comparer le nombre de jetons à une taille de tampon du support radio après que des ressources de liaison montante sont allouées dans une période de transmission en cours ; et
une unité de transmission (1202) configurée pour transmettre une troisième information de statut indiquant que le nombre de jetons est supérieur à zéro et n'est pas supérieur à la taille de tampon du support radio à la station de base ou transmettre une quatrième information de statut indiquant que le nombre de jetons n'est pas supérieur à zéro ou est supérieur à la taille de tampon du support radio à la station de base en fonction du nombre déterminé de jetons et du résultat de la comparaison.

14. Terminal mobile selon la revendication 13, dans lequel l'unité de transmission (1202) est configurée pour transmettre la troisième information de statut ou la quatrième information de statut dans un bit réservé dans un champ de sous-en-tête correspondant au support radio dans une Unité de données de protocole de Contrôle d'accès au média, PDU MAC.

15. Terminal mobile selon la revendication 13 ou 14, dans lequel l'unité de transmission (1202) est en outre configurée pour transmettre une taille de tampon d'un groupe de supports radio à la station de base ; ou
pour transmettre la taille de tampon du groupe de supports radio à la station de base lorsqu'une condition préétablie est satisfaite.

16. Terminal mobile, comprenant :
une première unité de détermination (1301) configurée pour déterminer une taille de tampon d'un support radio après que des ressources de liaison montante sont allouées dans une période de transmission en cours ;
une seconde unité de détermination (1302) configurée pour déterminer le nombre de jetons dans un seau à jetons correspondant au support radio lorsque la taille de tampon du support déterminée par la première unité de détermination (1301) est supérieure à zéro ;
une unité de comparaison (1303) configurée pour comparer le nombre de jetons à la taille de tampon du support radio lorsque le nombre de jetons déterminé par la seconde unité de détermination (1302) est supérieur à zéro ; et
une unité de transmission (1304) configurée pour transmettre une première information de statut indiquant que la taille de tampon du support radio n'est pas supérieure à zéro en fonction de la taille de tampon du support radio déterminée par la première unité de détermination (1301) ; ou
pour transmettre une deuxième information de statut indiquant que le nombre de jetons n'est pas supérieur à zéro et que la taille de tampon du support radio est supérieure à zéro à une station de base en fonction du nombre de jetons déterminé par la seconde unité de détermination (1302) ; ou
pour transmettre une cinquième information de statut indiquant que le nombre de jetons est supérieur à zéro et n'est pas supérieur à la taille de tampon du support radio à la station de base ou transmettre une sixième information de statut indiquant que le nombre de jetons est supérieur à zéro et à la taille de tampon du support radio et la taille de tampon du support radio est supérieure à zéro à la station de base en fonction du résultat de la comparaison par l'unité de comparaison (1303).

17. Terminal mobile selon la revendication 16, dans lequel l'unité de transmission (1304) est configurée pour transmettre la première information de statut, la deuxième information de statut, la cinquième information de statut ou la sixième information de statut dans un bit réservé dans un champ de sous-en-tête correspondant au support radio dans une Unité de données de protocole de Contrôle d'accès au média, PDU MAC.

18. Terminal mobile selon la revendication 16 ou 17, dans lequel l'unité de transmission (1304) est en outre configurée pour transmettre une taille de tampon d'un groupe de supports radio à la station de base ; ou
pour transmettre la taille de tampon du groupe de supports radio à la station de base lorsqu'une condition préétablie est satisfaite.
